# EUROPEAN PATENT APPLICATION

(11) **EP 4 620 899 A1**
(43) Date of publication of application: **24.09.2025**
(21) Application number: 25164847.3
(22) Date of filing: 19.03.2025
(51) Int. Cl.: B68B 1/04, B68B 7/00, B68C 1/08, B68C 1/12, B68C 1/14, B68C 5/00

(54) **A HORSE TACK PRESSURE RELIEVING DEVICE**

(30) Priority: 20.03.2024 SE 2400038
(71) Applicant: HippoMotion AB, 434 94 Vallda (SE)
(72) Inventor: Fridstrand, Pia, 434 94 Vallda (SE)
(74) Representative: Westpatent AB

(57) **Abstract**

The invention relates to a horse pressure relieving device (Siffra) comprising two chambers (114,115) which are spaced from each other by an intermediate section (117), wherein the two chambers (114,115) are in constant fluid communication with each other. The intermediate section (117) will have a lower profile (132) than the surrounding chambers (131), thus off-lifting any pressure in its underlying area (117) while ensuring the chambers (114,115) works together distributing and equalizing the pressure thereunder. The intermediate section functionality is obtained by distributed channels (121) connecting the chambers (114,115), aiming for unimpeded fluid flow. The device (FIG 7A, FIG 7B) is to be contained in an appropriate casing to be attached to / or integrated in, a such as a poll (101) or girth (102).

The result is maximum pressure relief distribution and off lifting pressure for sensitive parts of the horse.

## Description

### TECHNICAL FIELD

The invention relates to a horse tack pressure relieving device comprising two chambers which are spaced from each other by an intermediate section, wherein the two chambers are in fluid communication with each other.

### BACKGROUND TO THE INVENTION

On the back of the horse's head, the poll, many muscles and nerves attach, which continue through the neck following the neck and thoracic vertebrae to the withers and shoulder portion, and via further muscle layers towards the back and hindquarters. It is therefore important that head piece used to control the horse over the poll is correctly fitted and ideally also distribute the pressure on the poll to reduce the impact to the horse carrying a head piece.

The area under which the girth is placed is sensitive in multiple aspects. The breastbone expands during workout and if pressure is too high, the horse will experience difficulties breathing and discomfort. There are as well sensitive skin-deep nerves that if put under punctual pressure, can result in the horse being "coldbacked". Coldback is a major discomfort and can cause the horse to react violently to saddling and when the grith is tightened.

The wither of the horse is another sensitive area. The rugs used for outdoor are heavy and puts unnecessary stress to the wither and the nerves.

There have been several attempts to create relief and/or better fitting of horse gear for the horse. There are numerous variants of anatomically designed head pieces or girths. Use of varies kinds of paddings or the like.

DE20 2006 002 668 U1 describes a bridle provided with an air cushion integrated in the bridle in the neck portion. The cushion is even in height.

DE 437031 discloses an air-filled pillow for use in a horse harness saddle which is placed behind the withers, resting on the back of the horse, or on a horse pull collar - a padded loop, fitting closely on the horse's neck and rested on its shoulders, used for heavier pulling. The interaction of the pillows are restricted to a small opening. Furthermore, this invention needs to be filled to a large extend to work, which is displayed in the pictures.

US 539709 A Describes a harness-pad, to be accommodated on the back of a horse. Its compartments are separated. The vent is used to fill the air into the different compartments using a separate tube for each department.

US 5555710 A Describes a saddle bladder, to be accommodated on the back of a horse, between the horse and the saddle. It does have a small intermediate section, intentionally used to adjust the volume of air.

### SUMMARY OF THE INVENTION

The object of the invention is to provide a device for application on a horse gear that gives further pressure relief and adopt to the movements of the horse. This object has been achieved by providing a horse gear pressure relief device (hereafter device) according to claim 1. The device applied to a girth lifts the girth from the sensitive areas of the horse, which leads to that nerves and breastbone are relieved from pressure and at the same time distributes the pressure evenly. The device used at a head piece work in a similar fashion to not put pressure on the poll containing the vertebras, atlas and axis, being the origin of many muscles. The device applied to the withers via a horse rug, shoulder guard or special casing, will off lift the withers from pressure. Often the horse rugs are heavy and in the whither you find one of the largest nerves of the horse, these nerves are very sensitive to pressure, especially in the lower part of the withers. This device will require a higher filling grade than the previous examples.

### DETAILED DESCRIPTION OF THE INVENTION

The invention relates to a horse tack pressure relieving device, comprising at least two chambers, which are spaced from each other by an intermediate section, wherein the device is arranged to hold a fluid, wherein said fluid can move between said chambers via at least two channels, wherein the height of said intermediate section is lower than the height of the surrounding chambers when the pressure relieving device is inflated, and that the at least two channels are distributed across the width of the device.

One advantage of the invention is that the fluid communication is unimpeded.

In one embodiment the device can be prefilled wherein the filling grade of said fluid is 10 to 50 % of the maximum volume defined by the inner walls of the two chambers and the intermediate section. In another embodiment, the device can have a vent, wherein the filling grade is flexible.

The maximum volume is the volume defined by the inner walls of the two chambers and the intermediate section, measured during NTP (Normal Temperature and Pressure). The maximum volume can be achieved by applying a pressure about 2 PSI corresponding to approximately 10 kPa when filling the device with the fluid.

The material of the inner walls is flexible in the sense that it will adopt its shape to encompass the fluid but substantially not elastic such that it will stretch out. When the device if filled at its maximum volume it will not substantially expand in the x or y direction but more in the z direction perpendicular to the x and y direction.

In another embodiment, the chambers and the intermediate section of the device could be made from an elastic material fitted into a cover of a substantially flexible but not elastic material and the chambers would in this embodiment have a double-walled structure. The cover will limit the inner wall made of an elastic material to expand beyond the volume provided by the cover.

Surprisingly, it has been shown that a filling degree below 50% of the maximal volume defined above is particularly advantageous when used on a horse gear where a pressure relief is needed.

In various embodiments, the filling of said fluid can be 10 to 30%, 10 to 40%, 15 to 30%, 15 to 35%, 15 to 40%, 20 to 30%, or 20 to 40% of the maximum volume defined by the inner walls of the two chambers and the intermediate section. In other embodiments the filling of said fluid is about 10, 15, 20, 25, 30, 35, 40, 45 or 50% of the maximum volume defined by the inner walls of the two chambers and the intermediate section. In one particular embodiment, the filling is 20 to 30% of the maximum volume defined by the inner walls of the two chambers and the intermediate section.

The intermediate section 117 is designed to allow the fluid to flow between the chambers 114,115. The fluid is allowed to pass the intermediate section through 60-75% of the maximal cross-section of the intermediate section. In another embodiment, the fluid is allowed to pass the intermediate section 117 through 70-75% of the maximal cross-section of the intermediate section 117. The intermediate section 117 is furthermore constructed to prevent disruption of the flow. In one embodiment, the width 141 of the intermediate section 117, is at least 50% of the width 140 of the surrounding chambers 114,115. In another embodiment, the width 141 of the intermediate section 117, is at least 70% of the width 140 of the surrounding chambers 114,115.

An advantage distributing the flow channels is that it ensures that the chambers are in fluid communication with each other. In known device having only one communication channel where it is constructed on a small part of the device, it may not be able to let the chambers be in fluid communication with each other due to uneven load acting on the device.

The chambers are in one example comprised of two sheets sealed around the edges of the sheets to make the chambers fluid tight. The intermediate section 117 contains at least one seal or weld 125 to form at least two channels 121. In another embodiment the chambers can be made of one folded sheet, sealed to its intended shape.

The intermediate section is designed to reduce the height of the "bridging part" between the chambers, whilst still allowing for a constant flow of fluid between the chambers. This can be done in numerous ways, for example by putting welds in the material or mounting tubes between the chambers.

The purpose of using at least two channels in the intermediate section is to restrict the bulging of the intermediate section to reduce the height of the intermediate section.

The channels 121 in the intermediate section 117, shall be designed to support unimpeded flow, between the chambers 114,115. The channels 121 in the intermediate section 117 must be distributed utilising at least 50% of the device width, preferably 70% or more.

In one embodiment the intermediate section 117 is comprised of two channels 121. In another embodiment the intermediate section 117 is comprised of three channels 121. In a further embodiment the intermediate section 117 is comprised of four channels 121. In another embodiment the intermediate section 117 is comprised of five channels 121. In another embodiment spotwelding can be used instead of channels, they can be regular or irregular.

The length of the channels 121 of the intermediate section 117 are dependent of the size and type of the device. In one example it is about 26mm long, which will give a relief of approximately 46mm. The channels of intermediate section 117 are less than about 30mm spaced apart, preferably about 11 to 17mm.

The channels of intermediate section 117 shall be designed so that the height of intermediate section, when filled with fluid, is less than 70% of the surrounding chambers. Preferably less than 50% and more. The best design is when it comes to an as low profile as possible whilst still allowing for constant flow of the fluid.

To fit various kind of tack, the horse tack relieving device can be designed as a having a bent shape or a straight shape. They can also be off various length and width.

The invention can be applied to any part of the horse where a superior pressure relief and/or pressure distribution is needed in x and y dimension and in combination with an intermediate part where no or substantially less pressure is applied to the horse.

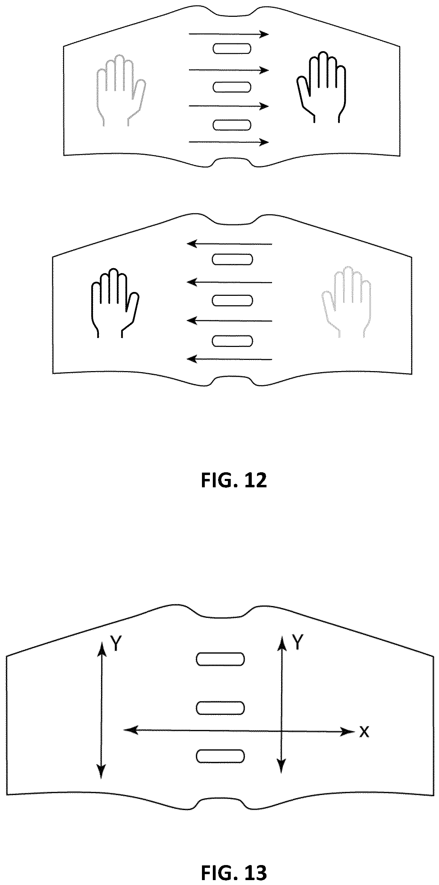

In one embodiment 101, the encased horse tack pressure relieving device is applied to a girth where the girth passes sternum of the horse. The girth could be a saddle girth or a girth for lunging or driving a horse. The device will relieve the pressure on the breastbone due to the difference in height if the intermediate section 117 and the chambers 114, 115. The device will also make sure that the pressure is evenly distributed even if the muscles are in difference sizes or are tensed differently. It could also be that the saddle is not perfectly fitted and hence pulls a part of the girth (back or front). The device will even it out, by the movement of fluid in X and Y axis as seen in FIG 13. The result will depend on the filling degree.

In another embodiment 102 the encased horse tack pressure relieving device is applied to the neck portion of a bridle. In prior art the device does not have an anatomic design nor an intermediate section having two flow channels. In this embodiment, it is vital that the device is as light as possible, and the vital nerves are offloaded. The device will adapt to the movement of the head and ensure an even distributed pressure is obtained.

In another embodiment the encased horse tack pressure relieving device is applied to a rug or shoulder guard. The device will relieve the pressure on the whither due to the difference in height if the intermediate section 117 and the chambers 114, 115. In this embodiment, the filling grade should be greater than 60%.

According to one embodiment example, the chambers of the device are filled with a gas which could be air, nitrogen, or helium. Air creates conditions for an easy and a cost-efficient manufacturing in a facilitated filling of the chambers.

According to a further embodiment example, the sheet(s) comprises a Thermoplastic Elastomer (TPE) material. It creates conditions for a long life of the device and a very light device, which is important.

There are seven main TPE groups, such as Styrenic Block Copolymers (TPE-S), Thermoplastic Polyolefins (TPE-O or TPO), Thermoplastic vulcanisates (TPE-V or TPV), Thermoplastic polyurethanes (TPE-U or TPU), Thermoplastic copolyesters (TPE-E or COPE or TEEE), Melt processable rubber (MPR), or Thermoplastic polyether block amides (TPE-A).

According to a further embodiment example, the sheet(s) comprises a Thermoplastic Polyurethan (TPU) material. TPU material is flexible and has a high wear, tear, and puncture resistance. It creates conditions for a long life of the device and a very light device, which is important. These materials can be based on polyester or polyether urethane types.

The hardness of the material used for the sheet(s) is preferably at the high end of the Shore A scale, typically >80 Shore A.

Other possible choice of materials Ethylene Vinyl Acetate (EVA, also known as POLY), Ethylene Vinyl Acetate Rubber or other Ethylene Vinyl Acetate alternatives.

Yet another alternative material is TPE coated fabrics. Where the TPE provides for sealing possibilities as well as air proofness. The fabric can in one example be PVC. The material needs to be flexible but not elastic and it needs to be fluid tight.

According to one example, the device may be formed by interconnection of two sheets in a way forming the chambers 114, 115 and intermediate section 117 between the sheets, wherein the parts of the sheets defining the chambers forms the sheets. According to one example, the device may be formed by interconnecting the two sheets along two spaced lines, for example via welding. By filling the chambers to a certain extent, the sheets will bulge outwards between the connection lines.

According to an embodiment example, the two flexible sheets define two chambers 114, 115, which are spaced from each other by an intermediate section 117, and wherein the two chambers are in fluid communication with each other via at least two channels 121. This embodiment is especially advantageous in an application at a strap of a bridle extending over the horse's neck or at the belly girth. The device creates conditions for relieving the pressure on the horse's neck from the bridle, used with a girth it ensures the pressure from the girth is evened out and relieved from the sternum. The two chambers 114, 115 may be filled by air to an extent (such as half-filled or less) allowing a significant transfer of fluid from one of the two chambers to the other. In this way, the device may distribute the pressure on the horse neck / sternum to a great extent. For example, the horse's neck may not be completely symmetrical, wherein the device may distribute the pressure on the horse's neck accordingly.

The mounting of the device onto the horse gear in question can be made in several ways. In one example the device, be mounted in a free casing that is applied to intended strap of the horse gear (e.g., head piece 2 or belly girth 1). The fastening means can be Velcro, push buttons, or the like.

According to one embodiment example, where the device is used with a neck piece, the at least one connector is adapted to be connected to a halter in such a way that it makes use of the loop of the browband via a flexible wedge. It creates conditions for an easy attachment of the device to the headpiece. The way the connector is shaped and manufactured makes it easy to attach it without being visible, the length can be shortened to the exact need of the user. Thus, the strap need not to be prepared in any way for attachment of the device.

According to a further embodiment example, the attachment is formed by a Velcro section. It creates conditions for a rigid, yet flexible connection in a cost-efficient way, while still providing convenient operation for an end user. The device casing can be designed so that the Velcro can be applied to various positions, to fit multiple horse gear.

The horse gear where the device according to the invention can be used can be a head piece or saddle girth as described above. The horse gear can also be a girth for lunging or driving a horse or any part of a driving equipment. The horse gear can also be a rug or shoulder guard. It could also be used in connection to a nose band.

In a further embodiment example, the device can be integrated in the intended horse gear e.g. at the head piece, belly girth, rug or shoulder guard.

One advantage of a case mounted device, compared to an integrated variant, is that it can be applied to multiple gear. Example, applied to the belly girth when riding, or applied to the lunge girth when lunging. Another advantage is that it provides for easy cleaning of the device.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
FIG. 1 is a geared-up horse. A side view of a bridle and a saddle with girth, showing the places where the device can be mounted.
FIG. 2 is a detailed view of a girth with the device in a casing mounted to the girth.
FIG. 3 is a view of a bridle arranged on a horse, showing the device and its casing applied to the neck via the head piece.
FIG. 4 is a detailed view of the device in a casing mounted onto the head piece.
FIG. 5 is a perspective view of the device in a casing, unmounted according to an embodiment example.
FIG. 6 is a perspective view of the device, with details.
FIG. 7A - B are views of a device designs. 7A is a device design to be used at a girth, and 7B is a device design to be used at a head piece.
FIG. 8A is a view of device with details and pointing out the cross-section cuts.
FIG. 8B is a cross section view of one of the chambers of the device.
FIG. 8C is a cross section view of the intermediate section of the device.
FIG. 9A-H shows one way of manufacturing the device.
FIG. 10 shows details of the intermediate section.
FIG. 11A-J shows various designs of the device and the intermediate section.
FIG. 12 shows the manual steps to conduct the flow control tests.
FIG. 13 shows the flow in X and Y direction of the device.
FIG.14 shows the result of some of the pressure tests.

### DETAILED DESCRIPTION OF EXAMPLE EMBODIMENTS

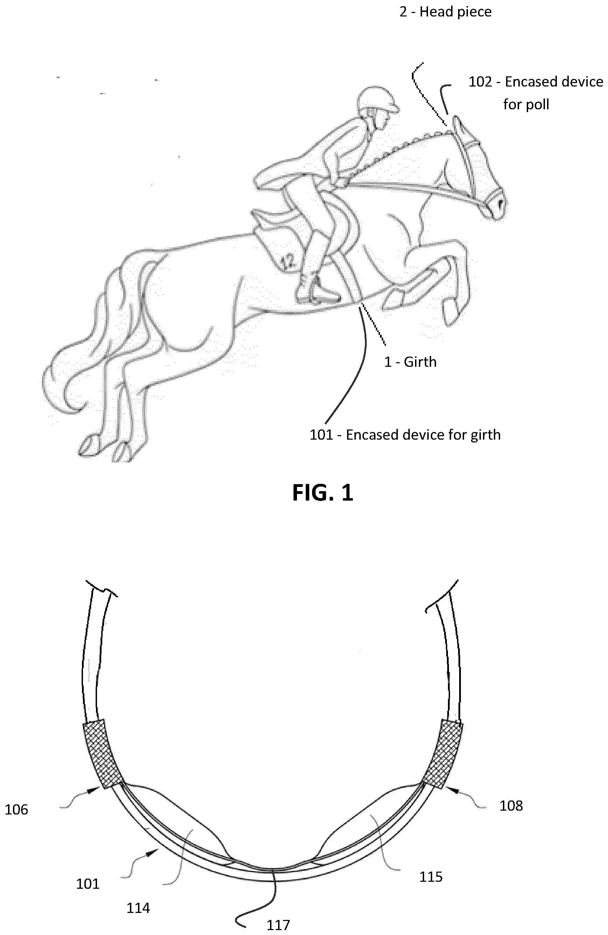

FIG. 1 is a geared-up horse. It has a side view of a bridle and a saddle with girth, showing the places where the device according to the invention shall be mounted. In most embodiment the device 100, is mounted in a casing. The device used in a casing at the girth is denoted 101. The device used in a casing at the head piece is denoted 102. In the following embodiments, the fluid is air.

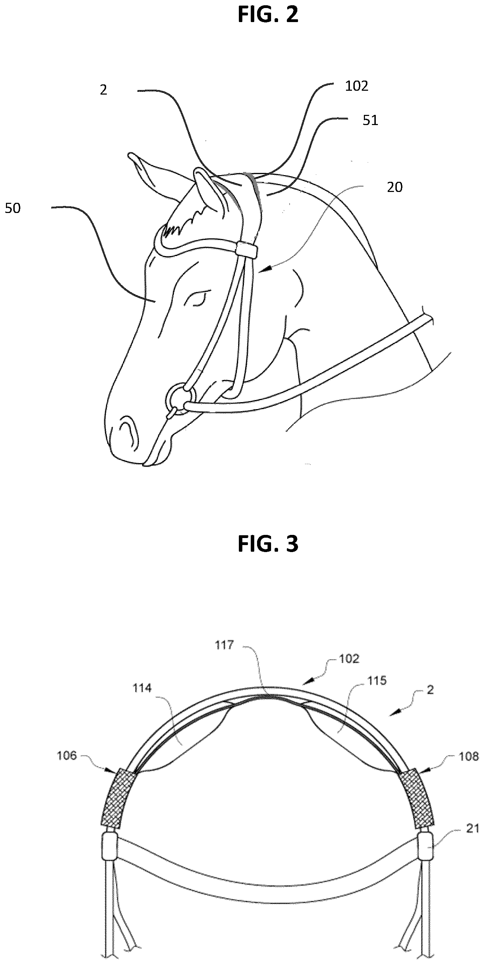

FIG 2 is a front view of a girth and the cased device, 101, as if it was arranged on a horse. Horse is omitted for visibility purpose. The chambers 114 and 115 are interconnected via the intermediate section, 117, in which the air can flow from one chamber to the other in response to the forces put on the device. The intermediate section, 117, has a lower profile than the surrounding chambers, 114 and 115, and will therefore relief pressure on the breastbone of the horse. The device can be mounted onto the girth in different ways. In FIG 2 the device is mounted via Velcro straps. In another example, the device can be integrated in the girth.

FIG. 3 is a side view of a horse's head 50, with cased device 102 applied to the head piece 2, in an equestrian bridle, 20. The cased device 102 with 100 encapsulated is adapted for being arranged in association to a bridle, or other head gear, providing elasticity and load balancing with decompression of sensitive nerve pathways on the horse's poll 51. In another embodiment the brow band 21 can be used to mount the device to the bridle 20 as described above.

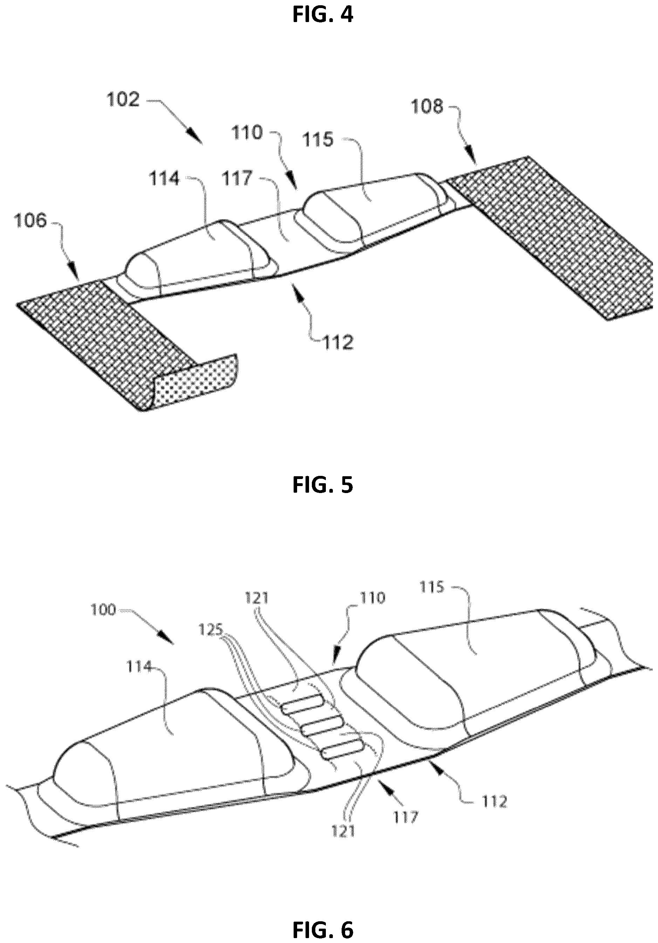

FIG. 4 is a front view of part of a head piece, 2, where the cased device 102 is applied. Horse is omitted for visibility purpose. The device 100 is designed for relieving the pressure on the horse's neck from the bridle. More specifically, the device 100 is adapted for relieving the nerves extending along the horse's neck from the pressure. The chambers 114 and 115 are interconnected via the connecting bridge, 117, via which the air can flow from one chamber to the other. The bridge itself, 117, has a lower profile than the surrounding chambers, 114 and 115, and will therefore relief pressure on the poll and its surrounding nerves. The device is arranged in such a way in relation to the head piece that the intermediate section 117 between the two chambers 114, 115 is arranged centrally with regard to the horse's head. Thus, the device will be positioned between the horse's head and the head piece in a way relieving the pressure on the horse's neck from the bridle. In other words, the two chambers 114, 115 will form spacers between the horse's neck and the head piece.

FIG. 5 is a perspective view of the device 100 in a container 101 or 102. This view focuses on the different parts of the device but omits the details of the intermediate section 117. This embodiment shows a possible placement of fastening means 106, 108. According to an alternative fastening arrangement, the fastening means may comprise of magnets or release buttons instead of Velcro. In another embodiment a Velcro strap can be applied over the centre of the cased device. The fastening means may also be applied on other parts of the device casing.

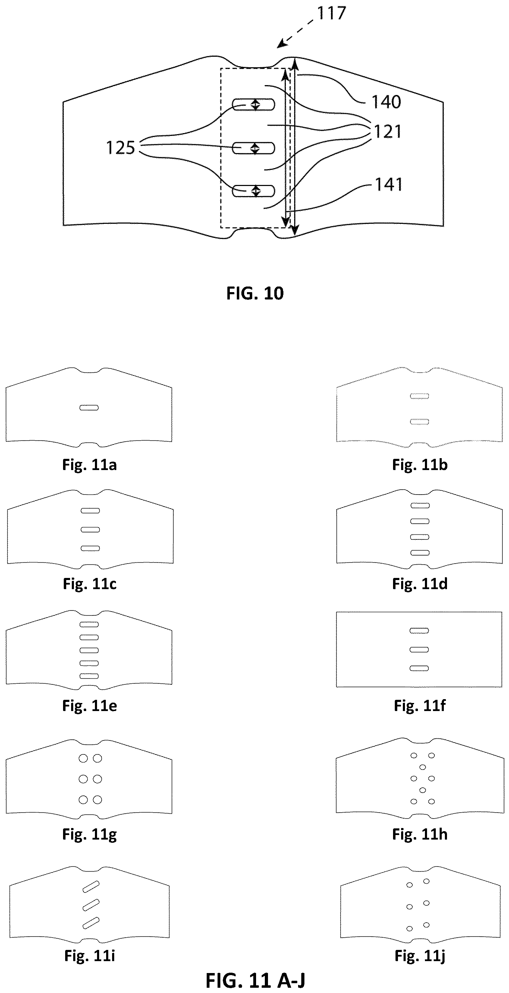

FIG. 6 Shows the device 100 comprising sheets 110, 112 defining two chambers 114, 115 and the chambers are filled with a fluid for providing the resiliency of device 100. The two chambers 114, 115 are spaced by an intermediate section 117, which has a substantially smaller thickness (height) than a maximum distance between the sheets defining the chambers 114, 115. More specifically, intermediate section 117 is substantially flat. The intermediate section 117 is formed by the two sheets 110, 112 arranged in a close relationship and preferably at least partially in contact with each other. The intermediate section 117 is positioned centrally between the two chambers 114, 115. The two sheets 110, 112 are rigidly connected to each other in the intermediate section 117 via a plurality of welds or seals, see figure 11. Thus, the intermediate section 117 only comprises a small volume of air, wherein its extension in a transverse direction is substantially smaller than an extension of one of the two chambers 114, 115 in the transverse direction.

The chamber 114 of the device 100 is filled with a gas and especially air. Further, the sheets 110, 112 of the device 100 comprises a Thermoplastic Elastomers (TPE) material, preferably a Thermoplastic Polyurethan (TPU) material. More specifically, the device 100 has the shape of a pillow, wherein the flexible sheets 110, 112 defining the chambers 114, 115 bulge outwards in opposite directions when the device 100 is in a non-stressed state.

Further, the two chambers 114, 115 are in fluid communication with each other via the intermediate section 117. More specifically, the intermediate section 117 comprises at least one channel 121 adapted for fluid communication between the two chambers 114, 115. Generally, the intermediate section 117 comprises at least two such channels 121 and in Fig 6 the embodiment shows four channels.

The two chambers 114, 115 may be filled by air to an extent allowing a significant transfer of air from one of the two chambers 114, 115 to the other. In this way, the device may distribute the pressure on the horse's poll to a great extent. For example, the horse's poll may not be completely symmetrical, wherein the device may distribute the pressure on the horse's neck accordingly. The same reasoning applies for when the device is applied to a girth.

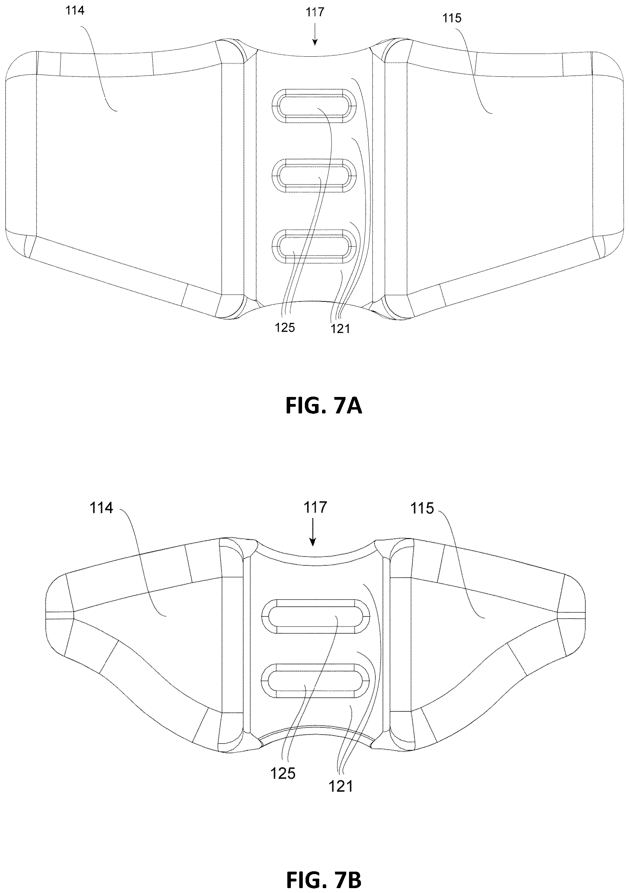

FIG 7A. Shows the device in one design which is optimized to fit a saddle girth. The width of the device for the gith is normally around 80-150mm, hence the additional channels compared to the channels used in the device for the poll which is narrower. In another embodiment the girth can be wider, it all depends on the girth manufacturer.

FIG 7B. Shows the device in one design which is optimized to fit the neck piece of a bridle. The width of the head piece for the poll is normally around 40-100mm, the device to be applied to the head piece has generally 2-3 channels.

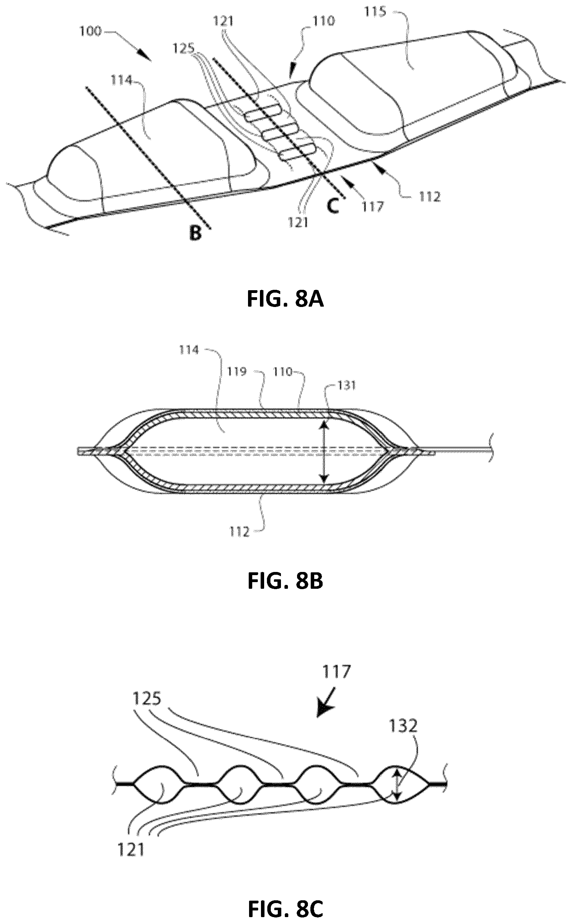

FIG. 8A Shows the cross-section cuts (B and C) detailed in FIG 8B (cut B) and FIG 8C (Cut C).

FIG. 8B is a side cross section view of one of the cased device chambers 114 or 115. The chambers when filled with fluid will get a certain height 131. The device can be contained in a casing comprises a layer 119 of preferably moist transporting material or moist absorbing material. The layer 119 may be a mesh fabric or other fabric. Layer 119 may be sheepskin. The layer 119 is at least arranged on a surface of the member 100 of resilient structure facing the horse's body in an operative state. More specifically, the layer 119 is at least arranged on the sheets of the member 100 of resilient structure defining the chambers 114, 115 facing the horse's body in the operative state. The layer 112 can be of other material then 119, more specifically vegan leather or leather, other fabric is not excluded. Other padding can be added in between the member of resilient structure 100 and 112 and 119 respectively.

FIG. 8C is a side cross section view of the device intermediate section 117, its seals or welds 125 and its channels 121 in one embodiment wherein the intermediate section comprises of four parallel channels. Showed in the central portion of FIG 11c and 11f. The channels of the intermediate section 117 are designed so that the height of the intermediate section 132, when filled with fluid, is less than 70% of the height of the surrounding chambers 131. Preferably less than 50% and more. The best design is when the intermediate section exhibits an as low profile as possible whilst still allowing for constant flow of the fluid. To obtain this, several channels are constructed. The number of channels depends on the size of the gear the device shall be applied to. The construction shall also take into consideration the durability of the contexture areas. If the seals or welds are made to thin, they may break upon heigh pressure. The width of the seals or welds used in one embodiment is 5 - 7 mm.

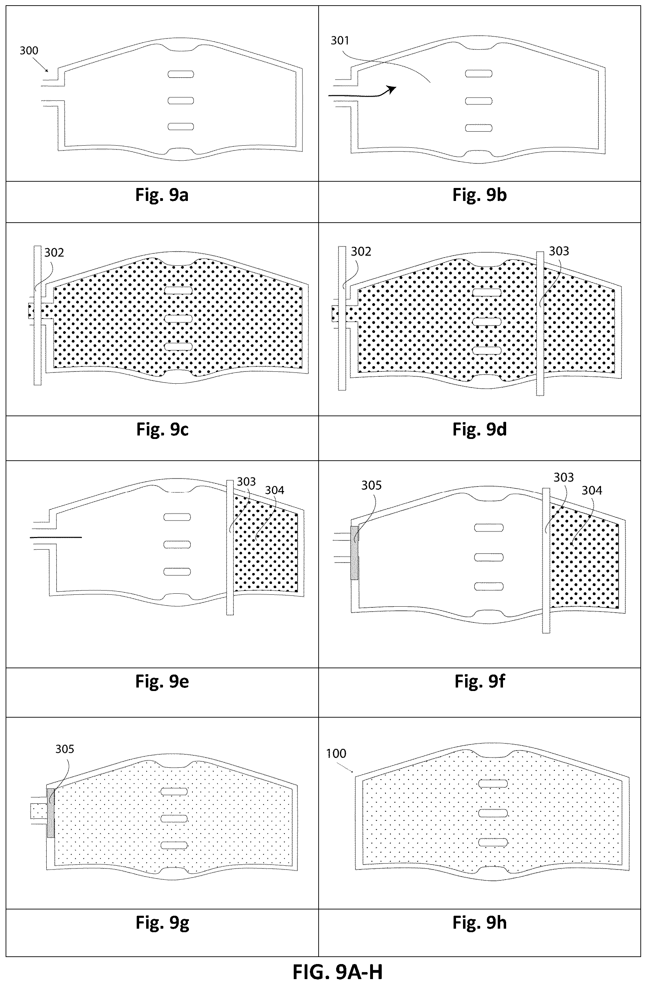

FIGS. 9a-h are perspective views of consecutive steps in manufacturing the device according to one example. In FIG. 9a, a template 300 for sealing with the precise dimension of one embodiment is manufactured. It is preferred to have rounded corner in the intra welding. This reduces the stress on each intra weld. A first sheet 110 of polyurethan material is provided. A second sheet 112 of polyurethan material is positioned in parallel, on top of the first sheet. The polyurethan sheets are then welded together using the welding template developed for its purpose. In FIG. 9b, the elongated chamber 301 formed between the connected edges of the sheets is filled with air via blowing air through an open end of the chamber. In FIG 9c. The chamber is then closed via clamp 302 so that air is entrapped. In FIG. 9d, A clamp 303 is set so that air is entrapped in the smaller chamber 304 between the clamp 303 and the second short edge. This is the percentage of the filling is controlled. In FIG. 9e, the clamp 302 is removed, and the unwanted air is let out. In FIG, 9f, the seal 305 is applied, preferably via welding, while the clamp 303 remains attached. In FIG 9g the clamp 303 is released, and the elongated chamber 301 is now filled with desired amount of air. In FIG 9h, the unwanted material is cut off.

FIG. 10 Shows details of the intermediate section. The advantage with a semi-wide to wide intermediate section 117 is that it will not easily be blocked by pressure points. The width 141 of the intermediate section 117 will be determined by the application the device shall be used for. Best practise is that the intermediate section 117 is as wide as possible, but never less than 50% of the width 140 of the surrounding chambers 114, 115. The flow control percentage was calculated by dividing the height of the sum of the welds 125 with the maximal cross section 141 of the intermediate section 117. This test showed that the best air flow yet obtaining the lowest profile of the intermediate section is reached when the flow is between 60-75%. The lowest profile is obtained by adding as many contexture stripes or contexture points as possible, keeping in mind the durability of the contextures during hard pressure. In one embodiment the width of the contextures is set to about 6mm.

FIGS. 11 a-j shows various designs of the device and the intermediate section. Several examples of alternative welding patterns to create the intermediate section between the chambers is showed. The aim is to obtain as low height in the intermediate section 117 as possible, and at the same time get an uninterrupted flow of the air between the chambers 114, 115. Alternative designs of the device outline are not excluded, it can be bent, straight etc to match the shape and form of the gear that the device will be applied to.

FIG 12 shows the steps of the flow test conducted. It was a manual process moving air from one chamber to the other by the pressure of the hand palms of the person performing the test. Each example design was examined by pressing the chambers and thereby moving the air. In table 1 below we refer to the configuration shown in fig 11 a-e, and the result of the tests.

**Table 1**

| **Figure No.** | **Flow %** | **Max Height 117** | **Max Height 115,116** | **Comment** |
|---|---|---|---|---|
| 11a | 93% | 30mm | 40mm | Nice flow, but the intermediate section 117 is too high. Will not give relief. |
| 11b | 86% | 19mm | 40mm | Good flow, the intermediate section 117 is still unnecessary high. |
| 11c | 80% | 13mm | 40mm | Good flow, nice low height of the intermediate section 117. |
| 11g | 80% | 13mm | 40mm | Good flow, nice low height of the intermediate section 117. |
| 11d | 73% | 9mm | 40mm | Flow acceptable, not optimal. |
| 11e | 66% | 7mm | 40mm | Flow not acceptable. Too much resistance. |

Table 2 shows the flow test results for the device intended to be used on a neck piece to relieve the pressure on the poll.

**Table 2**

| **Number of welds /seals** | **Flow %** | **Max height intermediate section** | **Max height chambers** | **% of chamber maximal height** | **Comment** |
|---|---|---|---|---|---|
| 1 | 91% | 16mm | 25mm | 64% | Nice flow, but the intermediate section 117 is too high. Will not give relief. |
| 2 | 82% | 10mm | 25mm | 40% | Good flow, nice low height of the intermediate section 117. |
| 3 | 74% | 7mm | 25mm | 28% | Flow acceptable, not optimal. |
| 4 | 65% | 5mm | 25mm | 20% | Flow not acceptable. Too much resistance. |

Resistance of the air shall be none or minimal. In the tests it was observed that a flow of 70-90% will work, where an optimized flow was observed at approx. 80% total opening.

The channels of the intermediate section 117 are designed so that the height of intermediate section, when filled with fluid, is lower than 70% of the surrounding chambers.

Preferably lower than 50% and more, of the surrounding chambers. The best design is when it comes to an as low profile as possible whilst still allowing for constant, unimpeded flow of the fluid.

FIG 13 shows the possible flow of fluid in the X and Y axis. The pressure relief needs to be conducted in X axis as well as in Y axis. The reason for this is that the device shall distribute pressure originated from the horse's gear, but also relief pressure when the horses' muscles work.

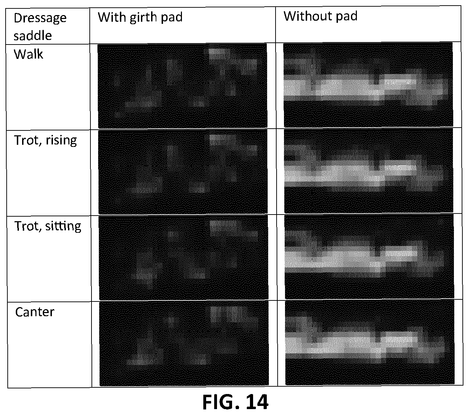

FIG 14 shows the results of the fluid filling tests. The aim was to understand which filling level that gives sufficient pressure relief. The test was conducted using a pressure sensor mat and an analysis software. The mat was placed in close contact with the horse (under the material to be measured), in this example girth with cased device or girth alone, and the measure was conducted for the various gaits - walk, trot and canter. It was conducted on a Belgian warm blood, under easy working sessions. The test was done with the same horse, but different gear (saddle and bridle) and different riders.

Several filling options were tested, i.e., 0%, 12%, 17%, 25%, 33%, 37% and 50%. The result is displayed in colours, the darker the colour, the less pressure.

The result shows that filling of 50% does not give good pressure relief. For the measured horse and the measured equipment - the best result was obtained with a filling around 25%.

More precisely for

| | |
|---|---|
| • Walk: | 25% |
| • Trot: | 25-33% |
| • Canter: | 25-37% |

It is to be understood that the present invention is not limited to the embodiments described above and illustrated in the drawings; rather, the skilled person will recognize that many changes and modifications may be made within the scope of the appended claims.

## Claims

1. A horse tack pressure relieving device (100), comprising at least two chambers (114, 115), which are spaced from each other by an intermediate section (117), wherein the device is arranged to hold a fluid, wherein said fluid can move between said chambers via at least two channels (121), **characterized in that** the height (132) of said intermediate section (117) is lower than the height (131) of the surrounding chambers (114, 115) when the pressure relieving device (110) is inflated, and that the at least two channels (121) are distributed across the width of the device (140).

2. A device according to claim 1, wherein the width (141) of the intermediate section (117) is greater than 50% of the width (140) of the surrounding chambers (114, 115).

3. A device according to any of the preceding claims, wherein the height (132) of the intermediate section (117) is less than 50% of the height (131) of the surrounding chambers (114, 115) when the pressure relieving device (110) is inflated.

4. A device according to any of the preceding claims, wherein the intermediate section (117) contains at least one seal (125) to form the at least two channels (121).

5. A device according to any of the preceding claims, wherein the intermediate section (117) is provided with seals (125) arranged so that the maximum height (132) of the intermediate section (117) is less than 50% of the height (131) of the surrounding chambers (114, 115) when the pressure relieving device (110) is inflated.

6. A device according to any of the preceding claims, wherein intermediate section (117) is comprised of at least three channels (121).

7. A device according to any of the preceding claims, wherein the chambers (114, 115) and the intermediate section (117) constitute a closed system containing a predetermined filling grade of fluid.

8. A device according to claim 7, wherein the filling grade of said fluid is between 10 to 50 % of the maximum volume defined by the inner walls of the two chambers (114, 115) and the intermediate section (117).

9. A device according to any of the preceding claims, wherein the device comprises of a vent.

10. A device according to any of the preceding claims, wherein the device is comprised of two sheets (110, 112) sealed around the edges of the sheets.

11. A device according to any of the preceding claims, wherein the fluid is air.

12. A device according to any of the preceding claims, wherein the device comprises a Thermoplastic Elastomer (TPE) material

13. The device according to any of the preceding claims, wherein the material is flexible in line with a shore A greater than 80.

14. A casing for attachment to a horse gear comprising the device according to any of the preceding claims.

15. A horse gear comprising the device according to any of the claims 1 to 13.
